(19) Europäisches Patentamt
European Patent Office
Office européen des brevets

(11) EP 2 755 127 B1

# (12) EUROPEAN PATENT SPECIFICATION

(45) Date of publication and mention of the grant of the patent:
**10.07.2019 Bulletin 2019/28**

(21) Application number: **12830518.2**

(22) Date of filing: **25.05.2012**

(51) Int Cl.:
*G06F 7/52* (2006.01) *G06F 7/72* (2006.01)

(86) International application number:
**PCT/CN2012/076053**

(87) International publication number:
**WO 2013/034000 (14.03.2013 Gazette 2013/11)**

## (54) COMPOSITE FINITE FIELD MULTIPLIER

KOMBINATIONSMULTIPLIKATIONSVORRICHTUNG MIT ENDLICHEM FELD

MULTIPLICATEUR DE CORPS FINI COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 CN 201110267272**

(43) Date of publication of application:
**16.07.2014 Bulletin 2014/29**

(73) Proprietor: **South China University of Technology**
**Guangdong 510640 (CN)**

(72) Inventors:
- **TANG, Shaohua**
  **Guangzhou**
  **Guangdong 510640 (CN)**
- **YI, Haibo**
  **Guangzhou City**
  **Guangdong 510640 (CN)**

(74) Representative: **Romano, Giuseppe et al**
**Società Italiana Brevetti S.p.A**
**Piazza di Pietra, 39**
**00186 Roma (IT)**

(56) References cited:
**EP-A2- 0 566 215**
**WO-A2-2005/036811**
**CN-A- 101 095 102**
**CN-A- 101 739 233**
**CN-A- 101 819 519**
**CN-A- 102 314 330**
**CN-U- 202 217 262**
**US-A- 4 251 875**
**US-B1- 6 701 336**

- **KOBAYASHI H: "A FAST MULTI-OPERAND MULTIPLICATION SCHEME", PROCEEDINGS OF THE SYMPOSIUM ON COMPUTER ARITHMETIC, May 1981 (1981-05), pages 246-250, XP000748082,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 755 127 B1

## Description

### FIELD OF THE INVENTION

The present invention relates generally to a device for multiplying elements of a composite finite field, and more particularly to a multiplier for multiplying three operands of a composite finite field.

### BACKGROUND OF THE INVENTION

A finite field is a field containing only a finite number of elements, which is widely used in various engineering fields. At present, based on different design basis, multiplication over a finite field are mainly divided into four types: multiplication on the standard basis, multiplication on normal basis, multiplication on double basis, and multiplication on triangular basis.

A composite finite field is a special form of the finite field, and the composite finite field $GF((2^n)^m)$ is the isomorphic form of the finite field $GF(2^{n\times m})$, which is effectively used in various cryptographic applications and encoding techniques. Effective multiplication design over the composite finite field plays a vital role in the implementation of cryptographic algorithms. There are a variety of known multipliers over composite finite fields in prior art, including software multiplier and hardware multiplier, both of which are devices for performing multiplication of two operands.

The multiplication of three operands is widely used in solving mathematical problems and engineering fields, for example, solving of the Oil and Vinegar polynomial which is commonly used in the cryptographic field. The structure of the Oil and Vinegar polynomial includes a plurality of multiplications of three operands as follows:

$$\sum_{i\in O_l, j\in S_l} \alpha_{ij} x_i x_j + \sum_{i,j\in S_l} \beta_{ij} x_i x_j + \sum_{i\in S_{l+1}} \gamma_i x_i + \eta .$$

The Oil and Vinegar polynomial is the most common form of polynomial in multivariate public key cryptosystem. Each individual element of this polynomial is an element of the computing domain. When calculating the value of the Oil and Vinegar polynomial, especially the first two terms of $\alpha_{ij}x_ix_j$ and $\beta_{ij}x_ix_j$, the multiplication of three operands may be used for many times. The multiplication of three operands is not limited to this.

The existing techniques for solving the multiplication of three operands are realized by multipliers of two operands. However, under real-time and speed-sensitive circumstances, there is a need to use specific hardware devices to implement multiplication of three operands.

An article of H. Kobayashi from the 'Proceedings of the symposium on computer arithmetic', May 1981, namely "A fast multi-operand multiplication scheme", discloses a multi-operand multiplication method involving use of separate multipliers in cascade.

WO2005/036811 A2 discloses a finite field polynomial multiplying unit for multiplying first and second 32 bit input data in a polynomial residue class ring defined by L (X) $=x^4-1$ with values in the finite field GF ($2^8$) as coefficients. A primitive polynomial of the finite field GF ($2^8$) is denoted m(x) $=x^8+x^4+x^3+x+1$. The finite field polynomial multiplying unit is configured to implement C(X) = A(X) x B(X) mod L(X). It comprises a GF ($2^8$) finite field multiplying unit, GF ($2^8$) data adding units and an operation controlling unit. The operation controlling unit performs input control of multiplicands and multipliers to the finite field multiplying unit. The GF ($2^8$) data adding units perform addition of the GF ($2^8$) finite field multiplying results.

US4251875 A discloses a method and an apparatus for performing Galois multiplication operations with Galois multipliers.

### SUMMARY OF THE INVENTION

Therefore, in order to address the deficiencies and inadequacies in the art, the present invention aims to provide a high-speed composite finite field multiplier for multiplying three operands.

The object of the invention is achieved by the composite finite field multiplier apt to selectively perform 3-input $GF(2^n)$ or $GF((2^n)^2)$ multiplication as defined in claim 1.

Compared with the prior art, the present invention has the following advantages and technical effects.

By using the $GF((2^n)^2)$ multiplier, the $GF(2^n)$ standard basis multiplier and the $GF(2^n)$ look-up table multiplier, the multiplication of three operands is realized. Compared with the existing multiplier, the multiplier of the present invention has significant advantages in the speed of multiplying three operands over $GF((2^n)^m)$, and thus can be widely used in various engineering fields, especially in hardware implementation of cryptographic algorithms and in solving various mathematical problems.

BRIEF DESCRIPTION OF THE DRAWINGS

Fig. 1 is a schematic structure chart of the composite finite field multiplier in one embodiment of the present invention;

Fig. 2 is a schematic structure chart of the controller in one embodiment of the present invention;

Fig. 3 is a schematic structure chart of the $GF((2^n)^2)$ multiplier in one embodiment of the present invention;

Fig. 4 is a schematic structure chart of the $GF(2^n)$ standard basis multiplier in one embodiment of the present invention;

Fig. 5 is a schematic structure chart of the $GF(2^n)$ look-up table multiplier in one embodiment of the present invention.

DETAILED DESCRIPTION OF THE PREFERRED EMBODIMENTS

The invention will be better understood with reference to the following description taken in conjunction with the specific embodiments and the accompanying drawings. Accordingly, the scope of the present invention is defined by the appended claims rather than the foregoing description and the exemplary embodiments described therein.

Examples

As illustrated in Fig. 1, the composite finite field multiplier of the present invention includes a controller, input ports, an output port, a $GF((2^n)^2)$ multiplier, a $GF(2^n)$ standard basis multiplier and a $GF(2^n)$ look-up table multiplier; the controller is connected respectively to the input ports, the output port, the $GF((2^n)^2)$ multiplier, the $GF(2^n)$ standard basis multiplier and the $GF(2^n)$ look-up table multiplier; the $GF((2^n)^2)$ multiplier is connected respectively to the $GF(2^n)$ standard basis multiplier and the $GF(2^n)$ look-up table multiplier.

Following is a detailed description of the components of the multiplier of the present invention.

(1) The input ports: as illustrated in Fig. 1, there are six input ports in the embodiment of the invention, including five input ports for inputting data signal and one for control signal, wherein the input ports a, b and c are configured respectively to input three operands $a(x)$, $b(x)$ and $c(x)$; the input ports p and q are configured respectively to input the irreducible polynomial $p(x)$ and $q(x)$ selected over $GF(2^n)$ and $GF((2^n)^m)$; and the input port k is configured to input a control signal.

$a(x)$, $b(x)$, $c(x)$, $p(x)$ and $q(x)$ are in the following forms:

$$a(x) = a_{n-1}x^{n-1} + a_{n-2}x^{n-2} + ... + a_0;$$

$$b(x) = b_{n-1}x^{n-1} + b_{n-2}x^{n-2} + ... + b_0;$$

$$c(x) = c_{n-1}x^{n-1} + c_{n-2}x^{n-2} + ... + c_0;$$

$$p(x) = x^n + p_{n-1}x^{n-1} + p_{n-2}x^{n-2} + ... + p_1x + 1;$$

$$q(x) = q_m x^m + q_{m-1}x^{m-1} + ... + q_0;$$

wherein $q_m, q_{m-1}, ..., q_0$ are elements of $GF(2^n)$, and $a_{m-1}, a_{m-2}, ..., a_0, b_{m-1}, b_{m-2}, ..., b_0, c_{m-1}, c_{m-2}, ..., c_0,$ and $p_{n-1}, p_{n-2}, ..., p_1$ are elements of $GF(2)$.

The control signal $k$ is a (2-bit)value, which has four types of binary value, i.e. $(00)_2$, $(01)_2$, $(10)_2$ and $(11)_2$.

(2) The output port: as illustrated in Fig. 1, the output port d is configured to output the calculation results $d(x)$ obtained by solving the expression $(a(x) \times b(x) \times c(x)) \bmod (q(x))$, wherein mod represents modular operation;

(3) The controller: as the only component that can communicate with I/O port, the controller is a core component of the multiplier of the present invention, which can control the $GF((2^n)^2)$ multiplier, the $GF(2^n)$ standard basis multiplier and the $GF(2^n)$ look-up table multiplier.

As illustrated in Fig. 2, the controller includes a parser and a processer interconnected with each other.

The parser is configured to parse the inputted control signal. For example, when the value of the inputted control signal $k$ is $(00)_2$, the parser will notify the processor to implement the standard basis multiplication of three operands over $GF(2^n)$; when the value of the inputted control signal $k$ is $(01)_2$, the parser will notify the processor to implement the look-up table multiplication of three operands over $GF(2^n)$; when the value of the inputted control signal $k$ is $(10)_2$, the parser will notify the processor to implement the standard basis multiplication of three operands over $GF((2^n)^2)$; when the value of the inputted control signal $k$ is $(11)_2$, the parser will notify the processor to implement the look-up table multiplication of three operands over $GF((2^n)^2)$.

The processor is configured to receive the inputted control signal, and to notify the function components to implement corresponding functions based on the parsing results of the parser. For example, if the parsing result indicates that it is necessary to implement the standard basis multiplication of three operands over $GF(2^n)$, then the processor will send $a(x)$, $b(x)$, $c(x)$ and $p(x)$ to the $GF(2^n)$ standard basis multiplier and wait for feedback; once the feedback result is obtained, the processor will send the result to the output port d. If the parsing result indicates that it is necessary to implement the look-up table multiplication of three operands over $GF(2^n)$, then the processor will send $a(x)$, $b(x)$, $c(x)$ and $p(x)$ to the $GF(2^n)$ look-up table multiplier and wait for feedback; once the feedback result is obtained, the processor will send the result to the output port d. If the parsing result indicates that it is necessary to implement the standard basis multiplication of three operands over $GF((2^n)^2)$, or the look-up table multiplication of three operands over $GF((2^n)^2)$, then the processor will send $a(x)$, $b(x)$, $c(x)$, $p(x)$ and $q(x)$ to the $GF((2^n)^2)$ multiplier and wait for feedback; once the feedback result is obtained, the processor will send the result to the output port d.

(4) The $GF((2^n)^2)$ multiplier: as illustrated in Fig. 3, the $GF((2^n)^2)$ multiplier includes a processor and a scheduler interconnected with each other; the processor is configured to implement the multiplication $(a(x) \times b(x) \times c(x))$ $\mathrm{mod}(q(x))$ of three operands over $GF((2^n)^2)$, and the scheduler is configured to call the $GF(2^n)$ standard basis multiplier and the $GF(2^n)$ look-up table multiplier. The processor uses an XOR gate circuit to obtain the calculation results when processing the addition operation over the $GF(2^n)$ field. While processing the multiplication $(k_i(x)\cdot k_j(x)\cdot k_m(x))\ \mathrm{mod}(p(x))$ over the $GF(2^n)$ field, the scheduler calls the $GF(2^n)$ look-up table multiplier or $GF(2^n)$ standard basis multiplier to obtain the calculation results.

(5) The $GF(2^n)$ standard basis multiplier: as illustrated in Fig. 4, the $GF(2^n)$ standard basis multiplier includes a internal processor configured to implement the multiplication $(a(x) \times b(x) \times c(x))\mathrm{mod}(p(x))$ of the three operands $a(x)$, $b(x)$ and $c(x)$ on a standard basis over $GF(2^n)$. The standard basis multiplication of the three operands $a(x)$, $b(x)$ and $c(x)$ over $GF(2^n)$ includes the steps of:

(5-1) Calculating $v_{ij}$ based on $x^i$ mod $p(x) = \sum_{j=0}^{n-1} v_{ij} x^j$ , wherein $i = 0, 1,...,3(n-1)$, $j = 0,1,...,n-1$.

(5-2) Calculating $S_i$ based on $S_i = \sum_{j+k+l=i} a_j b_k c_l$, wherein $i = 0,1,...,3(n-1)$.

(5-3) Calculating $d_i$ based on $d_i = \sum_{j=0}^{3(n-1)} v_{ji} S_j$ , wherein $i = 0,1,...,n-1$.

(5-4) Let $d(x) = \sum_{i=0}^{n-1} d_i x^i$ , then $d(x)$ is the product of the three operands $a(x)$, $b(x)$ and $c(x)$ over $GF(2^n)$, and $d(x)$ is also an element of $GF(2^n)$.

(6) The $GF(2^n)$ look-up table multiplier: the $GF(2^n)$ look-up table multiplier is configured to implement the multiplication $(a(x)\times b(x)\times c(x))\mathrm{mod}(p(x))$ of the three operands $a(x)$, $b(x)$ and $c(x)$ over $GF(2^n)$. As illustrated in Fig. 5, the look-up table multiplier includes a processor and a $GF(2^n)$ look-up table interconnected with each other.

The $GF(2^n)$ look-up table is constructed according to the following principle. There are $2^n$ elements of $GF(2^n)$ in total. Assuming that $\alpha$ is a primitive root of $GF(2^n)$, then each nonzero element of $GF(2^n)$ may be expressed as an exponentiation of $\alpha$, i.e. as an element in $\{\alpha^0,\alpha^1,...,\alpha^{2n-2}\}$. Assuming that $k_i(x)$ is an element of $GF(2^n)$, and may be expressed as $\alpha^i$, then $\{i, k_i(x)\}$ is saved into the look-up table. When calculating $(k_i(x)\cdot k_j(x)\cdot k_m(x))\ \mathrm{mod}(p(x))$, the internal processor only needs to look up the exponentiations of $\alpha$ corresponding to $k_i(x), k_j(x), k_m(x)$, i.e. $i,j,m$ by searching in the constructed look-up table. Next, the value $u$ of $(i + j + m)\mathrm{mod}(2^n - 1)$ is calculated. Lastly, an element $k_u(x)$ of $GF(2^n)$ corresponding to $\alpha^u$ is looked up by searching in the constructed look-up table. Thus, $k_u(x)$ is the result of $(k_i(x) \cdot k_j(x) \cdot k_m(x))\mathrm{mod}(p(x))$.

Working procedure of the multiplier of the present invention is now further described taking the example of $n = 4$.

Let the control signal $k$ be $(00)_2$, the parser of the controller notifies the processor of the controller to implement the standard basis multiplication of three operands over $GF(2^4)$. The processor of the controller receives the inputted data signals $a(x)$, $b(x)$, $c(x)$ and $p(x)$. As the three operands, $a(x)$, $b(x)$ and $c(x)$ have the following forms: $a(x) = a_3x^3 + a_2x^2 + a_1x + a_0$, $b(x) = b_3x^3 + b_2x^2 + b_1x + b_0$ and $c(x) = c_3x^3 + c_2x^2 + c_1x + c_0$, all of which are elements of $GF(2^4)$; $p(x)$ has a fixed inputting form: $p(x) = x^4 + p_3x^3 + p_2x^2 + p_1x + 1$, and it is an irreducible polynomial selected over $GF(2^4)$. $a_3,a_2,a_1,a_0,b_3,b_2,b_1,b_0,c_3,c_2,c_1,c_0$ and $p_3,p_2,p_1$ are all elements of $GF(2)$.

The processor of the controller sends $a(x)$, $b(x)$, $c(x)$ and $p(x)$ to the $GF(2^n)$ standard basis multiplier and waits for feedback results. At this time, the $GF(2^n)$ standard basis multiplier starts its processor, and implements the multiplication of three operands over $GF(2^n)$, with the process as follows:

calculating $v_{ij}$ based on $x^i \bmod p(x) = \sum_{j=0}^{3} v_{ij}x^j$, wherein $i = 0,1,..., 9$, $j = 0,1,..., 3$;

calculating $S_i$ based on $S_i = \sum_{j+k+l=i} a_j b_k c_l$, wherein $i = 0,1,...,9$;

calculating $d_i$ based on $d_i = \sum_{j=0}^{9} v_{ji} S_j$, wherein $i = 0,1,...,3$.

$\sum_{i=0}^{3} d_i x^i$ is the product of three operands over $GF(2^4)$, and the $GF(2^n)$ standard basis multiplier sends this result to the controller; the controller sends the result to the output port d.

Let the control signal $k$ be $(01)_2$, the parser of the controller notifies the processor of the controller to implement the look-up table multiplication of three operands over $GF(2^n)$. The processor of the controller receives the inputted data signals $a(x)$, $b(x)$, $c(x)$ and $p(x)$. As the three operands, $a(x)$, $b(x)$ and $c(x)$ have the following forms: $a(x) = a_3x^3 + a_2x^2 + a_1x + a_0$, $b(x) = b_3x^3 + b_2x^2 + b_1x + b_0$ and $c(x) = c_3x^3 + c_2x^2 + c_1x + c_0$, all of which are elements of $GF(2^4)$; $p(x)$ has a fixed inputting form: $p(x) = x^4 + p_3x^3 + p_2x^2 + p_1x + 1$, and it is an irreducible polynomial selected over $GF(2^4)$. $a_3,a_2,a_1,a_0,b_3,b_2,b_1,b_0,c_3,c_2,c_1,c_0$ and $p_3,p_2,p_1$ are all elements of $GF(2)$.

The processor of the controller sends $a(x)$, $b(x)$, $c(x)$ and $p(x)$ to the $GF(2^n)$ look-up table multiplier and waits for feedback results. The $GF(2^n)$ look-up table multiplier starts its processor, and implements the multiplication of three operands over $GF(2^n)$, with the detailed process as follows:

The processor of the $GF(2^n)$ look-up table multiplier constructs the $GF(2^4)$ look-up table according to the following principle. There are sixteen elements in $GF(2^4)$ in total. Assuming that $\alpha$ is a primitive root of $GF(2^4)$, then each nonzero element of $GF(2^4)$ may be expressed as an exponentiation of $\alpha$, i.e. as an element of $\{\alpha^0,\alpha^1,...,\alpha^{14}\}$. Assuming that $k_i(x)$ is an element of $GF(2^4)$, and may be expressed as $\alpha^i$, then $\{i, k_i(x)\}$ is saved into the look-up table.

When the processor of the $GF(2^n)$ look-up table multiplier is calculating $(k_i(x) \cdot k_j(x) \cdot k_m(x))\mathrm{mod}(p(x))$, the exponentiations of $\alpha$ respectively corresponding to $k_i(x),k_j(x),k_m(x)$, i.e. $i,j,m$, are looked up by searching in the constructed look-up table. Next, the value $u$ of $(i+j+m)\mathrm{mod}(15)$ is calculated. Lastly, an element $k_u(x)$ corresponding to $\alpha^u$ in $GF(2^4)$ is looked up by searching in the look-up table. Thus, $k_u(x)$ is the result of $(k_i(x) \cdot k_j(x) \cdot k_m(x))\ \mathrm{mod}(p(x))$. The $GF(2^n)$ look-up table multiplier sends the calculation result to the controller, and the controller outputs this result into the output port d.

Let the control signal k be $(10)_2$ or $(11)_2$, the parser of the controller notifies the processor of the controller to implement the standard basis multiplication or the look-up table multiplication of three operands over $GF((2^n)^2)$. The processor of the controller receives the inputted data signals $a(x)$, $b(x)$, $c(x)$, $p(x)$ and $q(x)$. As the three operands, $a(x)$, $b(x)$ and $c(x)$ have the following forms: $a(x) = a_hx + a_l$, $b(x) = b_hx + b_l$ and $c(x) = c_hx + c_l$, all of which are elements of $GF((2^4)^2)$; $a_h$, $a_l$, $b_h$, $b_l$, $c_h$ and $c_l$ are all elements of the $GF(2^4)$ finite field; $p(x)$ and $q(x)$, as the inputted data signals, are irreducible polynomials selected over $GF(2^4)$ and $GF((2^4)^2)$, and have the following forms: $p(x) = x^4 + x + 1$ and $q(x) = x^2 + x + e$, wherein $e = 9$ is a constant of $GF(2^4)$.

The processor of the controller sends $a(x)$, $b(x)$, $c(x)$, $p(x)$ and $q(x)$ to the $GF((2^n)^2)$ multiplier, and waits for the feedback result. At this time, the $GF((2^n)^2)$ multiplier starts its processor, and implement the multiplication of three operands over $GF((2^n)^2)$, calculating respectively:

$$d_h = e \cdot a_h \cdot b_h \cdot c_h + a_h \cdot b_h \cdot c_h + a_h \cdot b_l \cdot c_h + a_l \cdot b_h \cdot c_h + a_h \cdot b_h \cdot c_l + a_l \cdot b_l \cdot c_h + a_h \cdot b_l \cdot c_l + a_l \cdot b_h \cdot c_l,$$

$$d_l = e(a_h \cdot b_h \cdot c_h + a_h \cdot b_l \cdot c_h + a_l \cdot b_h \cdot c_h + a_h \cdot b_h \cdot c_l) + a_l \cdot b_l \cdot c_l.$$

The operator · is the multiplication operation over the sub-field $GF(2^4)$, and the operator + is the addition operation over the sub-field $GF(2^4)$. When the processor of the $GF((2^n)^2)$ multiplier is processing the multiplication operation over the sub-field $GF(2^4)$, it performs the calculation by starting the internal scheduler. At this time, the internal scheduler will need to send the three operands to the $GF(2^n)$ standard basis multiplier or the $GF(2^n)$ look-up table multiplier (i.e. sending to the $GF(2^n)$ standard basis multiplier when $k$ is $(10)_2$, and sending to the $GF(2^n)$ look-up table multiplier when $k$ is $(11)_2$), and wait for the feedback result. Once the $GF(2^n)$ standard basis multiplier or the $GF(2^n)$ look-up table multiplier has completed the necessary calculating and sent the result to the scheduler, the scheduler will immediately send the result to the processor of the $GF((2^n)^2)$ multiplier. When the processor of the $GF((2^n)^2)$ multiplier is processing the addition operation over the sub-field $GF(2^4)$, it obtains the calculating result by an XOR gate circuit. $d(x) = d_h x + d_l$ is the calculating result of $(a(x) \times b(x) \times c(x))$ mod$(q(x))$, and it is an element of $GF((2^4)^2)$; $d_h$ and $d_l$ are elements of $GF(2^4)$. The internal processor sends the result to the controller, and the controller sends the result to the output port d.

The above embodiments are preferred embodiments of the present invention, which, however, is not intended to limit the implementation of the present invention.

## Claims

1. A composite finite field multiplier apt to selectively perform 3-input $GF(2^n)$ or $GF((2^n)^2)$ multiplication, comprising:

- an input port, configured to input an operand $a(x)$, an operand $b(x)$, an operand $c(x)$, an irreducible polynomial $p(x)$, an irreducible polynomial $q(x)$ and a control signal k,
wherein the irreducible polynomial $p(x)$ has the form of:

$$p(x) = x^n + p_{n-1}x^{n-1} + p_{n-2}x^{n-2} + ... + p_1 x + 1$$

and the irreducible polynomial $q(x)$ has the form of:

$$q(x) = q_2 x^2 + q_1 x + q_0;$$

- a $GF(2^n)$ standard basis multiplier, configured to implement the multiplication $(a(x) \times b(x) \times c(x))$ $mod(p(x))$ of the three operands $a(x)$, $b(x)$ and $c(x)$ on the standard basis over $GF(2^n)$;
- a $GF(2^n)$ look-up table multiplier, configured to implement the multiplication $(a(x) \times b(x) \times c(x))$ $mod(p(x))$ of the three operands $a(x)$, $b(x)$ and c(x) based on the look-up table over $GF(2^n)$;
- a $GF((2^n)^2)$ multiplier, comprising
a first processor and a scheduler interconnected with each other;
the first processor is configured to implement the multiplication $(a(x) \times b(x) \times c(x))$ $mod(q(x))$ of the three operands $a(x)$, $b(x)$ and c(x) over $GF((2^n)^2)$; the first processor comprising an XOR gate circuit for processing addition operations over the $GF(2^n)$ field, the scheduler being adapted to call the $GF(2^n)$ look-up table multiplier or $GF(2^n)$ standard basis multiplier in order to obtain intermediate calculation results, the first processor being apt to add said intermediate calculation results using its XOR gate circuit, and wherein the scheduler is adapted to call the $GF(2^n)$ look-up table multiplier or the $GF(2^n)$ standard basis multiplier according to a value of said control signal $k$;
- a controller, configured to parse the control signal $k$ and control the $GF((2^n)^2)$ multiplier, the $GF(2^n)$ standard basis multiplier and the $GF(2^n)$ look-up table multiplier to selectively implement 3-input $GF(2^n)$ multiplication or 3-input $GF((2^n)^2)$ multiplication based on the parsing result;
- an output port, configured to output the results;

wherein the controller is connected respectively to the input port, the output port, the $GF((2^n)^2)$ multiplier, the $GF(2^n)$ standard basis multiplier and the $GF(2^n)$ look-up table multiplier; and
the $GF((2^n)^2)$ multiplier is connected respectively to the $GF(2^n)$ standard basis multiplier and the $GF(2^n)$ look-up

table multiplier.

**2.** The composite finite field multiplier of claim 1, wherein the control signal k is a (2-bit) value, and has four types of binary value of $(00)_2$, $(01)_2$, $(10)_2$ and $(11)_2$.

**3.** The composite finite field multiplier of claim 1, wherein the controller comprises a parser and a second processor interconnected with each other;

the parser is configured to parse the inputted control signal;
the second processor is configured to receive the data signal from the input port, and, according to a parsing result from the parser, to notify the $GF((2^n)^2)$ multiplier, the $GF(2^n)$ standard basis multiplier and the $GF(2^n)$ look-up table multiplier to perform a function corresponding to the parsing result.

## Patentansprüche

**1.** Zusammengesetzter Endlicher-Körper-Multiplikator, der geeignet ist, selektiv eine 3-Eingaben-$GF(2^n)$- oder $GR((2^n)^2)$-Multiplikation auszuführen, umfassend:

- einen Eingangsport, der konfiguriert ist, um einen Operanden *a(x)*, einen Operanden *b(x),* einen Operanden *c(x),* ein nichtreduzierbares Polynom *p(x),* ein nichtreduzierbares Polynom *q(x)* und ein Steuersignal k, einzugeben, wobei das nichtreduzierbare Polynom *p(x)* die folgende Form aufweist:

$$p(x) = x^n + p_{n-1}x^{n-1}+p_{n-2}x^{n-2}+\ldots+p_1x+1$$

und das nichtreduzierbare Polynom q(x) die folgende Form aufweist:

$$q(x) = q_2x^2 + q_1x + q_o;$$

- einen $GF(2^n)$-Standard-Basis-Multiplikator, der konfiguriert ist, um die Multiplikation *(a(x) × b(x) x c(x)) mod(p(x))* der drei Operanden *a(x), b(x)* und *c(x)* auf der Standardbasis über $GF(2^n)$ zu implementieren;
- einen $GF(2^n)$-Look-Up-Tabellen-Multiplikator, der konfiguriert ist, um die Multiplikation *(a(x) × b(x) ×x c(x)) mod(p(x))* der drei Operanden a(x), *b(x)* und c(x) basierend auf der Look-Up-Tabelle über $GF(2^n)$ zu implementieren;
- einen $GF((2^n)^2)$-Multiplikator, umfassend
einen ersten Prozessor und einen Scheduler, die miteinander verbunden sind;
wobei der erste Prozessor konfiguriert ist, um die Multiplikation (a(x) ×*b(x)* ×*c(x))* mod(*q*(*x*)) der drei Operanden *a(x), b(x)* und *c(x)* über $GF((2^n)^2)$ zu implementieren; wobei der erste Prozessor eine XOR-Gate-Schaltung zum Verarbeiten von Additionsoperationen über dem $GF(2^n)$-Körper umfasst, wobei der Scheduler geeignet ist, den $GF(2^n)$-Look-Up-Tabellen-Multiplikator oder den $GF(2^n)$-Standard-Basis-Multiplikator aufzurufen, um Zwischenberechnungsergebnisse zu erhalten, wobei der erste Prozessor geeignet ist, die Zwischenberechnungsergebnisse unter Nutzung seiner XOR-Gate-Schaltung zu addieren, und wobei der Scheduler geeignet ist, den $GF(2^n)$-Look-Up-Tabellen-Multiplikator oder den $GF(2^n)$-Standard-Basis-Multiplikator gemäß einem Wert des Steuersignals *k* aufzurufen;
- ein Controller, der konfiguriert ist, um das Steuersignal k und den $GF((2n)^2)$-Multiplikator, den $GF(2^n)$-Standard-Basis-Multiplikator und den $GF(2^n)$-Look-Up-Tabellen-Multiplikator zu parsen, um selektiv eine 3-Eingaben-$GF(2^n)$-Multiplikation oder eine 3-Eingaben-$GF((2^n)^2)$-Multiplikation basierend auf dem Parsing-Ergebnis zu implementieren;
- einen Ausgangsport, der konfiguriert ist, die Ergebnisse auszugeben;
wobei der Controller jeweils mit dem Eingangsport, dem Ausgangsport, dem $GF((2^n)^2)$-Multiplikator, dem $GF(2^n)$-Standard-Basis-Multiplikator und dem $GF(2^n)$-Look-Up-Tabellen-Multiplikator verbunden ist; und der $GF((2^n)^2)$-Multiplikator jeweils mit dem $GF(2^n)$-Standard-Basis-Multiplikator und dem $GF(2^n)$-Look-Up-Tabellen-Multiplikator verbunden ist.

**2.** Zusammengesetzter Endlicher-Körper-Multiplikator nach Anspruch 1, wobei das Steuersignal *k* ein (2-bit)-Wert ist und vier Typen binärer Werte von $(00)_2$, $(01)_2$, $(10)_2$ und $(11)_2$ aufweist.

3. Zusammengesetzter Endlicher-Körper-Multiplikator nach Anspruch 1, wobei der Controller einen Parser und einen zweiten Prozessor umfasst, die miteinander verbunden sind;
wobei der Parser konfiguriert ist, das eingegebene Steuersignal zu parsen;
wobei der zweite Prozessor konfiguriert ist, um das Datensignal von dem Eingangsport zu empfangen und, gemäß einem Parsing-Ergebnis von dem Parser, den $GF((2^n)^2)$-Multiplikator, den $GF(2^n)$-Standard-Basis-Multiplikator und den $GF(2^n)$-Look-Up-Tabellen-Multiplikator zu benachrichtigen, eine Funktion entsprechend dem Parsing-Ergebnis auszuführen.

## Revendications

1. Multiplicateur sur corps fini composite, apte à effectuer de manière sélective une multiplication à 3 entrées sur $GF(2^n)$ ou sur $GF((2^n)^2)$, comprenant :

   - un port d'entrée conçu pour introduire un opérande $a(x)$, un opérande $b(x)$, un opérande $c(x)$, un polynôme irréductible $p(x)$, un polynôme irréductible $q(x)$ et un signal de commande $k$,
   dans lequel le polynôme irréductible $p(x)$ a la forme :

   $$p(x) = x^n + p_{n-1}x^{n-1} + p_{n-2}x^{n-2} + \ldots + p_1x + 1$$

   et le polynôme irréductible $q(x)$ a la forme :

   $$q(x) = q_2x^2 + q_1x + q_0 ;$$

   - un multiplicateur sur base standard sur $GF(2^n)$, conçu pour mettre en oeuvre la multiplication $(a(x) \times b(x) \times c(x)) \bmod (p(x))$ des trois opérandes $a(x)$, $b(x)$ et $c(x)$ sur la base standard sur $GF(2^n)$ ;
   - un multiplicateur par table de consultation sur $GF(2^n)$, conçu pour mettre en oeuvre la multiplication $(a(x) \times b(x) \times c(x)) \bmod (p(x))$ des trois opérandes $a(x)$, $b(x)$ et $c(x)$ sur la base de la table de consultation sur $GF(2^n)$ ;
   - un multiplicateur sur $GF((2^n)^2)$, comprenant :

     un premier processeur et un programmateur interconnectés entre eux ;
     le premier processeur est conçu pour mettre en oeuvre la multiplication $(a(x) \times b(x) \times c(x)) \bmod (q(x))$ des trois opérandes $a(x)$, $b(x)$ et $c(x)$ sur $GF((2^n)^2)$ ; le premier processeur comprenant une porte OU exclusif destinée à traiter des opérations d'addition sur le corps $GF(2^n)$, le programmateur étant conçu pour appeler le multiplicateur par table de consultation sur $GF(2^n)$ ou le multiplicateur sur base standard sur $GF(2^n)$ afin d'obtenir des résultats intermédiaires de calcul, le premier processeur étant apte à additionner lesdits résultats intermédiaires de calcul à l'aide de sa porte OU exclusif, et dans lequel le programmateur est conçu pour appeler le multiplicateur par table de consultation sur $GF(2^n)$ ou le multiplicateur sur base standard sur $GF(2^n)$ en fonction d'une valeur dudit signal de commande $k$,

   - un dispositif de commande, conçu pour analyser le signal de commande k et commander le multiplicateur sur $GF((2^n)^2)$, le multiplicateur sur base standard sur $GF(2^n)$ et le multiplicateur par table de consultation sur $GF(2^n)$ afin de mettre en oeuvre de manière sélective une multiplication à 3 entrées sur $GF(2^n)$ ou une multiplication à 3 entrées sur $GF((2^n)^2)$, sur la base du résultat d'analyse ;
   - un port de sortie, conçu pour délivrer en sortie les résultats ; dans lequel le dispositif de commande est connecté respectivement au port d'entrée, au port de sortie, au multiplicateur sur $GF((2^n)^2)$, au multiplicateur sur base standard sur $GF(2^n)$ et au multiplicateur par table de consultation sur $GF(2^n)$ ; et

   le multiplicateur sur $GF((2^n)^2)$ est connecté respectivement au multiplicateur sur base standard sur $GF(2^n)$ et au multiplicateur par table de consultation sur $GF(2^n)$.

2. Multiplicateur sur corps fini composite selon la revendication 1, dans lequel le signal de commande $k$ est une valeur sur 2 bits, et a les quatre types de valeur binaire $(00)_2$, $(01)_2$, $(10)_2$ et $(11)_2$.

**3.** Multiplicateur sur corps fini composite selon la revendication 1, dans lequel le dispositif de commande comprend un analyseur et un second processeur interconnectés entre eux ;
l'analyseur est conçu pour analyser le signal de commande introduit ;
le second processeur est conçu pour recevoir le signal de données en provenance du port d'entrée et, en fonction d'un résultat d'analyse issu de l'analyseur, pour notifier au multiplicateur sur $GF((2^n)^2)$, au multiplicateur sur base standard sur $GF(2^n)$ et au multiplicateur par table de consultation sur $GF(2^n)$ d'exécuter une fonction correspondant au résultat d'analyse.

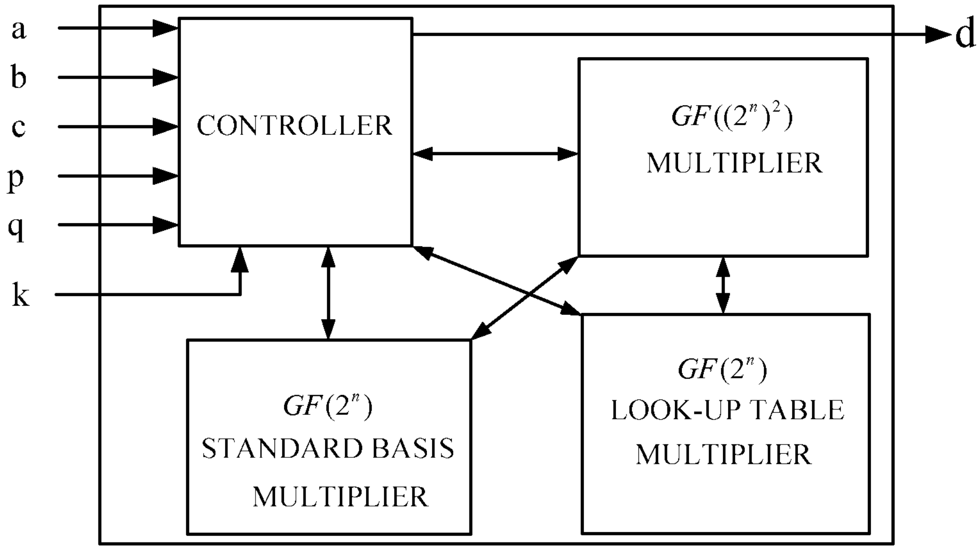
a
b
c
p
q
k
d
CONTROLLER
$GF((2^n)^2)$
MULTIPLIER
$GF(2^n)$
STANDARD BASIS
MULTIPLIER
$GF(2^n)$
LOOK-UP TABLE
MULTIPLIER

Fig. 1

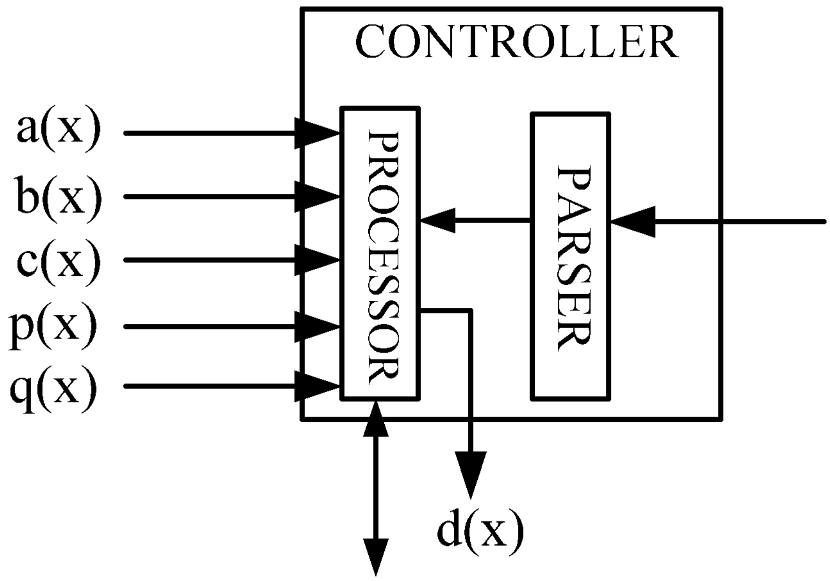
CONTROLLER
a(x)
b(x)
c(x)
p(x)
q(x)
PROCESSOR
PARSER
d(x)

Fig. 2

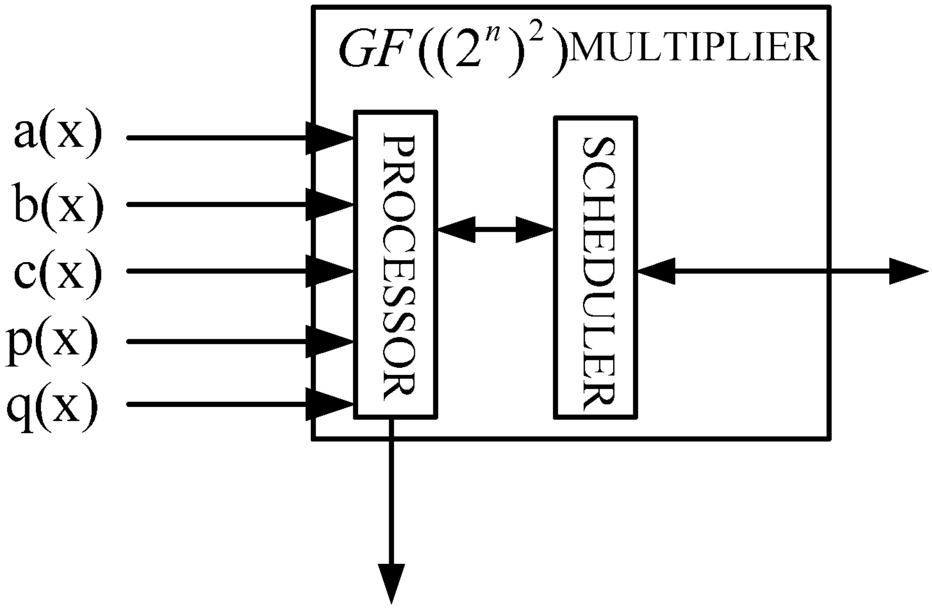
$GF((2^n)^2)$ MULTIPLIER
a(x)
b(x)
c(x)
p(x)
q(x)
PROCESSOR
SCHEDULER

Fig. 3

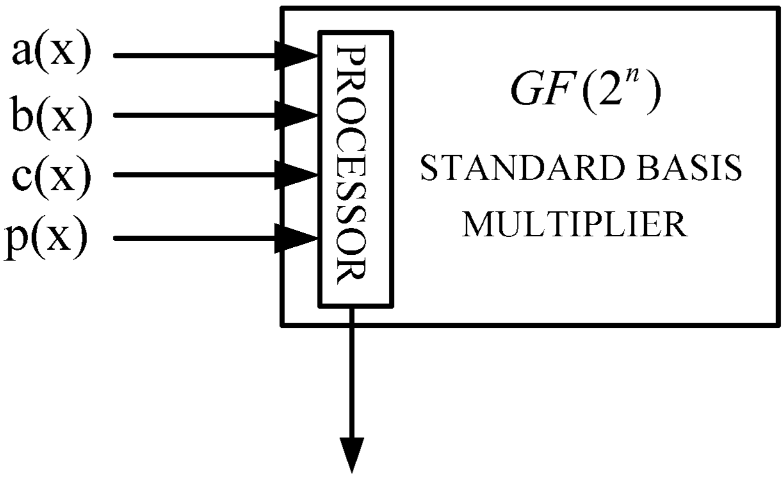
a(x)
b(x)
c(x)
p(x)
PROCESSOR
$GF(2^n)$
STANDARD BASIS
MULTIPLIER

Fig. 4

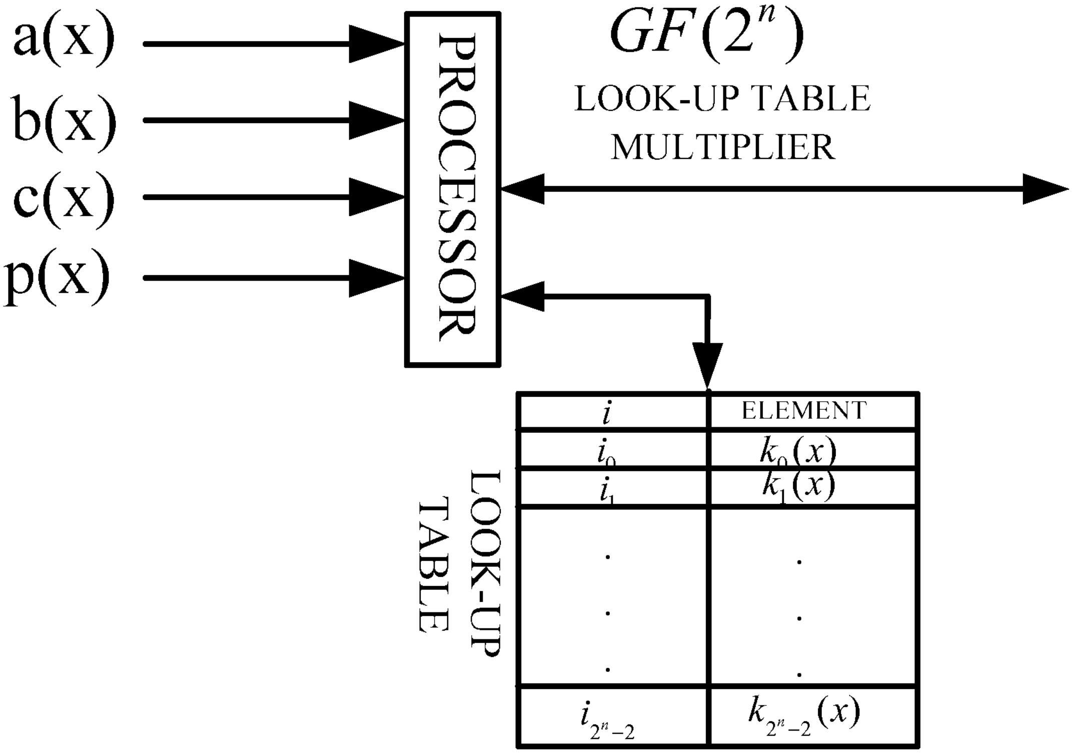
a(x)
b(x)
c(x)
p(x)
PROCESSOR
$GF(2^n)$
LOOK-UP TABLE
MULTIPLIER
LOOK-UP
TABLE
$i$
ELEMENT
$i_0$
$k_0(x)$
$i_1$
$k_1(x)$
$i_{2^n-2}$
$k_{2^n-2}(x)$

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005036811 A2
- US 4251875 A


### Non-patent literature cited in the description


- **H. KOBAYASHI.** A fast multi-operand multiplication scheme. *Proceedings of the symposium on computer arithmetic,* May 1981